# EUROPEAN PATENT APPLICATION

(11) **EP 4 458 831 A1**
(43) Date of publication of application: **06.11.2024**
(21) Application number: 23461573.0
(22) Date of filing: 05.05.2023
(51) Int. Cl.: C07F 9/142

(54) **METHOD OF TRANSESTERIFICATION OF PHOSPHITES TO OBTAIN A PRODUCT WITH ULTRA-LOW PHENOL CONTENT**

(71) Applicant: PCC ROKITA Spolka Akcyjna, 56-120 Brzeg Dolny (PL)
(72) Inventor: SWIST, Agnieszka, 54-212 Wroclaw (PL)
(74) Representative: Pietruszynska, Elzbieta

(57) **Abstract**

The invention relates to a method of transesterification of phosphites using alcohol in the presence of a fluoride alkaline catalyst allowing to obtain liquid organic phosphites with ultra-low phenol content and low volatility. Trialkyl phosphites obtainable by the method of the present invention, are used e.g. as additives to lubricants or as auxiliary stabilisers in the processing of various plastics, including those based on polyurethane and poly(vinyl chloride).

## Description

### Field of the invention

The object of the invention is a method for the transesterification of phosphites allowing to obtain liquid organic phosphites with ultra-low phenol content and low volatility. Trialkyl phosphites obtainable by the method of the present invention, are used e.g. as additives to lubricants or as auxiliary stabilisers in the processing of various plastics, including those based on polyurethane and poly(vinyl chloride).

### Prior Art

Due to increasingly strict requirements for building and finishing materials used in enclosed spaces, manufacturers of broadly understood plastics need to use components that guarantee the lowest possible concentration and least harmful composition of volatile compounds in the finished product. One compound affected by the stricter requirements is phenol, a typical VOC (*Volatile Organic Compound*) in polyvinyl chloride or polyurethane plastics. One source of phenol in plastics is secondary phosphite stabilisers, where the residual phenol content is up to 1% for alkyl-aryl phosphites and up to 0.1% for trialkyl phosphites. In many applications (such as various types of pipes and fittings, packaging, films, etc.), phenol content in additives at this level is acceptable and it does not constitute an immediate risk to human health. However, for products such as car furnishings, floor coverings, panels, mattresses, etc., which are used in closed, and therefore insufficiently ventilated areas, the accumulated phenol content may be detrimental to health.

On the other hand, adding a stabiliser such as trialkyl phosphite to the formulation stabilises the polymer formation process, preventing chain degradation and reducing the formation of undesired by-products. Thus, the use of phosphonic acid esters streamlines the proper processing of poly(vinyl chloride) and polyurethane.

Therefore, there emerged a need to provide an efficient method for preparing phosphite secondary stabilisers with ultra-low phenol content, a specific composition and strictly defined physical and chemical parameters, stable for at least 6 months, with colour on the platinum-cobalt scale ranging from 0 to 150 (as determined by visual method according to ASTM D1209-05(2019)), i.e. from colourless to pale yellow.

One well-known method for obtaining ultra-low phenol, or more specifically phenol-free, trialkyl phosphites consists in esterification of phosphorus trichloride with a suitable alcohol (US3621084, US3674897, US5710307, US3335204). The reaction is highly exothermic and requires efficient cooling, and the large amount of hydrogen chloride generated during the synthesis needs to be effectively and very swiftly neutralised to prevent the product from disintegrating into the respective dialkyl phosphite. Known acceptors of hydrogen chloride include tertiary amines, which form a solid amine hydrochloride, so that large amounts of solvent (dichloromethane, petroleum ether, toluene) need to be used. Therefore, the inventors of application GB1001177A suggest the use of tertiary amines whose hydrochlorides are liquid, such as tripentylamine, trihexylamine or triisooctylamine, which allows the process to be carried out without the use of a solvent. However, in order to separate the trialkyl phosphite from the amine hydrochloride, once the synthesis is over, extraction with a suitably selected organic solvent (pentane, hexane, heptane, etc.) is also necessary. The inventors of application GB1001177A also describe the possibility of adding an extractant directly to the reaction medium so as to minimise the time of contact between trialkyl phosphite and the source of hydrogen chloride, into which amine hydrochloride is also converted over time. Thus, the method for obtaining trialkyl phosphite according to application GB1001177A does not eliminate the use of large amounts of solvent during the process, so that the methods using amine acceptors of hydrogen chloride are poorly efficient, environmentally unfriendly and generate additional costs associated with solvent regeneration. Moreover, the use of equal molar volumes of the often toxic hydrogen chloride acceptor creates a very large amount of undesired by-product, the recycling of which is a complex process. Furthermore, the process of separating the amine hydrochloride from the product reduces the efficiency of the process, which is typically 70 to 90%. At the same time, the separation of the product from by-products is often insufficiently efficient, which leads to the presence of amine and its salts in phosphites.

The inventors of patent GB2489896 point to the transesterification reaction as an efficient method for obtaining ultra-low phenol content or phenol-free trialkyl phosphites. Starting from low molecular weight trialkyl phosphites (trimethyl phosphite, triethyl phosphite, triisopropyl phosphite) and an alcohol composed of C8 - C16 carbon atoms, higher molecular weight trialkyl phosphites are obtained (such as triisodecyl phosphite). The process has yields ranging from 85 to 96% without any catalyst or solvent being used. However, the products obtained by the method described show unsatisfactory stability over time (<< 6 months).

On the other hand, the authors of patent US6362260 describe the possibility of obtaining octaalkylpentaerythritol tetraphosphites by way of transesterification reaction of triphenyl phosphite with pentaerythritol and various alcohols. As described, synthesis at elevated temperatures, either without a catalyst or in the presence of a potassium hydroxide catalyst, yields phosphites with a low residual phenol content, defined by the patent authors as a residual phenol content of typically 3% or 2%, preferably 1% or 0.75% or less, preferably 0.5% or less or even "nil". Using potassium hydroxide as a catalyst may lead to the formation of water in the reaction medium, which may cause partial hydrolysis of the product or increase the impurity content of the phenolic distillate. For each of the three examples indicated in the patent, the reactions were carried out without a catalyst and the total phenol content of the resulting products was 1.2%, 50.0% and *nil,* respectively. For the *"nil"* content, no specific numerical value was indicated, nor was the analytical method (including its detection limit) given used to determine the content as above.

US application 2013/0090491 A1 also describes transesterification as a reaction useful for the synthesis of low-phenol content bisphenol phosphites with up to 0.5% residual phenol content. In the examples included in the description, residual phenol was determined using the GC-MS method at a level of 0.01 to 0.03%. The process was carried out in the presence of catalysts such as diphenyl phosphite, sodium methanolate, which can deteriorate the quality of the final product. Diphenyl phosphite may not only increase the residual and/or total phenol content, but also decrease the purity of the final phosphite. Then, the use of sodium methanolate in the transesterification reaction of triaryl phosphite may lead to the formation of anisole, which contaminates the phenol that is being removed from the reaction medium, as well as water, which may not only contaminate the phenol but also increase the acid number of the final product.

The above disclosures are incorporated herein by reference in their entirety.

Literature references, encompassing processes for obtaining ultra-low phenol content/phenol-free trialkyl phosphites identify the limitations of available technologies when confronted with the requirements for phosphite stabilisers in large scale production. Equally importantly, there are increasingly stringent legal and environmental requirements that are forcing technology design to seek environmentally friendly solutions to minimise or prevent the generation of process by-product streams that constitute waste. Thus, obtaining equal molar volumes of amine hydrochloride, a contaminated phenol or solvent by-product stream classified as waste or that require costly and complex purification or regeneration processes is environmentally incompatible. Thus, there is a need to provide an efficient and environmentally sound technology for obtaining phosphite stabilisers that will ensure the required purity of trialkyl phosphonic acid esters and stability of their physical and chemical parameters over time.

### Detailed description of the invention

The object of the present invention was to develop a transesterification method which will allow to obtain trialkyl phosphites containing no more than 0.01 wt% of free phenol and containing no more than 0.1 wt% of total phenol.

The inventors have surprisingly found that the technical problem of undesirable contamination of the transesterification products was overcome by using the method described below.

The invention relates to a method for transesterification of phosphites with the general formula (I):

P(OR¹)(OR²)(OR³) (I),

wherein substituent R¹ represents a phenyl group optionally substituted by 1 to 5 substituents independently selected from the group of substituents comprising C1-C9 alkyl substituents, substituents R² and R³ independently represent a phenyl group optionally substituted by 1 to 5 substituents independently selected from the group of substituents comprising C1-C9 alkyl substituents, or a linear or branched C8-C18 alkyl group,
using an alcohol with the general formula (II):

R⁴OH (II),

wherein the R⁴ substituent represents a linear or branched C8-C18 alkyl group,
in the presence of an alkaline catalyst, wherein the transesterification product contains not more than 0.01 wt% of free phenol and contains not more than 0.1 wt% of total phenol, characterised in that under anhydrous conditions and in an inert gas atmosphere, using an alkaline catalyst selected from the group comprising potassium fluoride, cesium fluoride and rubidium fluoride, the following steps are carried out:
a) providing a phosphite with the general formula (I),
b) raising the temperature of the mixture to a range between 90°C and 150°C and reducing the pressure in the reaction vessel to a range between 25 and 90 mbar,
c) providing an alcohol with the formula (II),
d) gradually distilling off phenol with the formula R¹OH,
e) stirring the reaction mixture for at least 15 minutes,
f) maintaining the temperature of the mixture at a range between 120°C and 165°C and stirring at this temperature for at least 15 minutes,
g) raising the temperature of the mixture to a range between 180°C and 220°C and reducing the pressure in the reaction vessel to a range between 0.5 mbar and 20 mbar while bubbling the inert gas through the reaction mixture,
h) isolating the reaction product.

In a preferred embodiment, the phosphite with the general formula (I) is selected from the group consisting of isodecyl diphenyl phosphite, diisodecyl phenyl phosphite and phosphites obtained by reacting phosphorus trichloride with phenol and an aliphatic alcohol having 8 to 18 carbon atoms, or obtained by way of the transesterification reaction of triaryl phosphite with an aliphatic alcohol having 8 to 18 carbon atoms, preferably from the group comprising isodecyl diphenyl phosphite and diisodecyl phenyl phosphite, more preferably in the phosphite with the general formula (I) the substituents R² and R³ are identical and they represent either a linear or a branched C8-C18 alkyl group, most preferably the phosphite with the general formula (I) constitute diisodecyl phenyl phosphite, didecyl phenyl phosphite.

In another preferred embodiment, the phosphites with the general formula (I) are isodecyl diphenyl phosphite, decyl diphenyl phosphite.

In the preferred inventive method, in the phosphite with the general formula (I) the substituents R¹, R² and R³ are identical and they represent a phenyl group which is optionally substituted by 1 to 5 substituents independently selected from the group of substituents comprising C1-C9 alkyl substituents, more preferably the phosphite with the general formula (I) is selected from the group comprising triphenyl phosphite, tricresyl phosphite, tris(tert-butylphenyl) phosphite, tris(tert-pentylphenyl) phosphite, tris(nonylphenyl) phosphite and a mixture of aryl phosphites obtained by reacting phosphorus trichloride with a mixture of phenol and alkylated phenol, still more preferably the phosphite with the general formula (I) is selected from the group comprising triphenyl phosphite, tricresyl phosphite, tris(tert-butylphenyl) phosphite, tris(tert-pentylphenyl) phosphite, tris(nonylphenyl) phosphite, and most preferably the phosphite with the general formula (I) is triphenyl phosphite.

In another preferred embodiment, step b) involves raising the temperature of the mixture to a range between 110°C and 135°C and reducing the pressure in the reaction vessel to a range between 30 and 50 mbar.

In yet another preferred embodiment, step e) involves stirring the reaction mixture for at least 25 minutes.

In another preferred embodiment, step f) involves maintaining the temperature of the mixture at a range between 130°C and 150°C and stirring at this temperature for at least 25 minutes.

In yet another preferred embodiment, step g) involves raising the temperature of the mixture to a range between 185°C and 210°C and reducing the pressure in the reaction vessel to a range between 1 mbar and 5 mbar, while bubbling the inert gas through the reaction mixture.

Preferably, the alcohol with the general formula (II) is selected from the group comprising octanol, 2-ethylhexanol, nonanol, 1-decanol, isodecanol, 1-dodecanol, tridecanol, isotridecanol, tetradecanol, hexadecanol and stearyl alcohol, more preferably the alcohol with the general formula (II) is selected from the group comprising 1-decanol, isodecanol, 1-dodecanol, tridecanol and isotridecanol.

In another inventive embodiment, the transesterification product contains no more than 0.005 wt% of free phenol and contains no more than 0.05 wt% of total phenol.

In a preferred embodiment, per each phenyl group in the phosphite with the general formula (I) at least 1 alcohol equivalent with the general formula (II) is used, and per each mole of the phosphite with the general formula (I) no more than 6 moles of the alcohol with the general formula (II) are used, more preferably not more than 5 moles of the alcohol with the general formula (II) are used per each mole of the phosphite with the general formula (I), most preferably not more than 4 moles of the alcohol with the general formula (II) are used per each mole of the phosphite with the general formula (I).

In a preferred embodiment, the catalyst is used in amounts of 0.01% to 1% by weight of the alcohol used, more preferably the catalyst is used in amounts of 0.03% to 0.5% by weight of the alcohol used.

The phosphite with the general formula (I) used is usually triaryl phosphite, where the aryl group is a phenyl group, but may also be a phenyl group substituted with at least one alkyl group. The alkyl substituent or substituents of the aryl group may be selected from alkyl groups composed of 1 to 9 carbon atoms, such as methyl, ethyl, propyl, butyl, pentyl, hexyl, nonyl and isomers of the aforementioned groups. A triaryl phosphite may be composed of three identical aryl groups, two identical aryl groups and a third different one, or three different aryl groups. In the inventive method, the phosphite with the formula (I) used may also be alkyl-aryl phosphites in which the aryl group is as described above, while the alkyl groups are aliphatic groups composed of 1 to 18 carbon atoms, such as methyl, ethyl, propyl, butyl, pentyl, hexyl, heptyl, octyl, nonyl, decyl, dodecyl, tridecyl, tetradecyl, hexadecyl, octadecyl and isomers of the above groups. Alkyl-aryl phosphites contain at least one alkyl group and at least one aryl group. Where an alkyl-aryl phosphite consists of two alkyl groups or two aryl groups, the multiplied groups may show the same structure or a different structure (two different alkyl groups, two different aryl groups).

In the aforementioned method, an example of the most commonly used triaryl phosphite with the formula (I) is triphenyl phosphite. Another example of a triaryl phosphite with the formula (I) applicable in the inventive method is tricresyl phosphite, tris(tert-butylphenyl) phosphite, tris(tert-pentylphenyl) phosphite, tris(nonylphenyl) phosphite, a mixture of aryl phosphites obtained by reacting phosphorus trichloride with a mixture of phenol and alkylated phenol. In turn, the alkyl-aryl phosphite, is e.g. isodecyl diphenyl phosphite, diisodecyl phenyl phosphite, which in the method under consideration is the raw material for the corresponding trialkyl phosphites, such as triisodecyl phosphite or phosphite composed of one or two isodecyl groups and two or one aliphatic group, respectively (diisodecyl dodecyl phosphite, dinonyl isodecyl phosphite, etc.). The most preferred, according to the object of the invention, is the use of alkyl-aryl phosphite as the raw material for the synthesis of a trialkyl phosphite consisiting of the same alkyl. For example, isodecyl diphenyl phosphite, diisodecyl phenyl phosphite for the synthesis of triisodecyl phosphite.

Aliphatic alcohols with the formula (II) typically used in the inventive method contain 8 to 18 carbon atoms in the molecule. The most commonly used alcohols in this method are octanol, 2-ethylhexanol, nonanol, 1-decanol, isodecanol, 1-dodecanol, tridecanol, isotridecanol, tetradecanol, hexadecanol, stearyl alcohol. Polyhydroxy alcohols may also be used in the inventive method.

The inventive method uses an alkaline fluoride catalyst. According to the invention, the transesterification of aryl phosphite with an aliphatic alcohol is carried out in the presence of catalytic amounts of alkali metal fluorides, particularly potassium fluoride, cesium fluoride and rubidium fluoride. High process yield (at least 96%) is ensured by using a catalyst in amounts ranging from 0.01 wt% to 1 wt% of the alcohol used, where the preferred amount of catalyst is a 0.03 to 0.5% ratio. Also, larger amounts of catalyst may be used in the process, which is, however, not only commercially unviable, but may also make the product filtration process problematic. The catalyst may be added to the reactor at the start of the process or during the process. Using alkali metal fluoride catalysts ensures the proper colour of the product: the resulting phosphites are colourless or pale yellow (0 to 150 on the platinum-cobalt scale). The use of alkali metal fluorides in the transesterification reaction also prevents the formation of water and anisole in the reaction medium, thus also preventing partial hydrolysis of the product and contamination of the phenolic by-product.

The transesterification reaction according to the invention is carried out in a solvent-free medium at elevated temperatures, typically in the range of 90 to 220°C, at pressures ranging from atmospheric to 0.5 mbar, until the required degree of aryl phosphite alcohol substitution is obtained. Increasing the temperature of the reaction may lead to the formation of a greater number and amount of by-products and a yellow colouration of the final product. The process is carried out in an atmosphere of inert gas, such as nitrogen or argon, which reduces the number of by-products formed. The reaction is also preferably carried out under anhydrous conditions.

The reactants may be mixed in different proportions, as long as the ratio of triaryl phosphite to alcohol is in the range of 1 : 3 to 1 : 6. Typically, the molar ratio of the amount of alcohol to the starting amount of the phosphonic acid ester is in the range of 3 : 1 to 4 : 1. Using a suitable alkyl-aryl phosphite as the raw material, the amount of alcohol used needs to be decreased by the degree of substitution of the aryl phosphite, following the rule that one aliphatic group in the phosphonic acid ester reduces the amount of alcohol added to the synthesis by 1 equivalent.

Syntheses according to the invention yield trialkyl phosphites with an ultra-low free/residual phenol content, i.e. at a level of at most 0.003%, and usually with contents below the detection limit, which is 0.001% (GC-MS analysis by external standard method; column: Elite 5-MS, carrier gas: He). With a residual phenol content of less than 0.001%, the trialkyl phosphites according to the invention are practically phenol-free. Furthermore, when obtaining trialkyl phosphites according to the invention, the phenol content is reduced 100-fold in comparison to standard trialkyl phosphites, also obtained by way of transesterification method from compounds composed of phenol with a residual phenol content of up to 0.1%. Thus, the use of trialkyl phosphite stabilisers obtained according to the invention in formulations allows for reducing the share of phenol as a VOC in the plastic by up to 100-fold compared to a material based on a standard phosphite stabiliser.

Moreover, using a transesterification reaction carried out in the presence of an alkaline fluoride catalyst, trialkyl phosphites are obtained with a very low total phenol content. The total phenol content provides a summary indication of the conversion factor of the raw material and other compounds, which are intermediate products of the substitution of the phenyl groups of the raw material with aliphatic groups derived from the alcohol used, and the residual/free phenol purification factor of the product. The inventive transesterification method gives at least of 98% (usually at least 99%) conversion rate of aryl phosphite to trialkyl phosphite, resulting in very low levels of total phenol in the product: at most 0.05%, usually <0.03% (spectrophotometric method using Hach LCK Phenols cuvette test, involving hydrolysing at 50°C of the sample to be analysed using 0.5M potassium hydroxide solution in methyl alcohol and collecting by distillation of the resulting phenol in aqueous solution). Thus, there is a more than 20-fold reduction in the total phenol content of the product compared to standard trialkyl phosphites, also prepared from phosphite phenol derivatives (of the triphenyl phosphite type), in which total phenol represents up to 1%. Equally importantly, trialkyl phosphites obtained by way of the inventive transesterification have physical and chemical parameters (such as acid number, density, refractive index, colour) that are stable for at least 6 months.

In the inventive method, phenol is formed as a by-product of the transesterification reaction, which, together with unreacted alcohol, is removed from the reaction mixture by distillation. In turn, the catalyst, or at least a significant part thereof, is removed by filtration. Thus, the inventive method does not require the use of any solvent in the purification step, which means it does not involve a cost- and energy-intensive solvent regeneration process.

The phenol distilled off during the reaction is a high-value raw material with a very high purity: 99.7 - 100%. This level of purity of phenol allows it to be used directly in the esterification reaction with phosphorus trichloride and thus to be directly recycled to the synthesis of triphenyl phosphite, the raw material used in the inventive transesterification reaction.

Another raw material distilled during the transesterification reaction by the inventive method is a mixture of phenol and alcohol, where phenol represents 10 to 70%, and alcohol 30 to 90%. Such a mixture of phenol and alcohol may be recycled to the synthesis of a phosphite based on the particular alcohol. For example, a mixture containing isodecanol may be recycled to a transesterification reaction yielding triisodecyl phosphite, with no detriment to the quality and properties of the primary product and by-products. The mixture of phenol and alcohol under consideration contains alcohol as a limiting reagent, as dictated by the stoichiometry of the reaction. Therefore, by recycling the mixture to the subsequent transesterification reaction, an insufficient amount of alcohol is introduced into the reaction mixture, so it is necessary to make up for the stoichiometric limit by adding pure alcohol.

In the inventive method, the by-products do not require additional purification processes and, as high-value raw materials, may be reused in syntheses. The absence of waste by-products not only involves tangible financial benefits, but also removes the problem of disposing of by-products and thus their negative impact on the environment.

The examples below are provided to add detail to the description of the present invention and should not be construed as limiting the scope of the invention.

### Comparative Example 1

### Triisodecyl phosphite

In a dried reactor equipped with a stirrer, temperature and pressure sensor, a system for uniform distribution of inert gas through the feedstock and a rectification column, triphenyl phosphite (200.0 g, 0.64 mol) is mixed with potassium fluoride (0.34 g, 5.8 mmol), followed by reducing the pressure to 50 mbar and the feedstock is heated to 120°C. When the preset temperature is reached, isodecanol is added to the reaction mixture (pure isodecanol and isodecanol mixed with phenol recovered from the synthesis of the previous batch, the total amount of isodecanol added: 326.5 g, 2.06 mol). The addition of isodecanol produces phenol, a by-product of the transesterification reaction, which is distilled off from the reaction medium together with the phenol added to the reaction along with the isodecanol from the synthesis of the previous batch. Once all the isodecanol has been added, the temperature is gradually increased to 190 - 195°C and the pressure is reduced to 10 mbar. After heating to 190°C, an inert gas purge is initiated through the feedstock to remove residual phenol and unreacted isodecanol from the reaction mixture. Once a phenol content of <0.1% is achieved, the process is terminated by cooling, and the product is isolated by way of filtration. The reaction yields approximately 311 g of a liquid, colourless (10 on the platinum-cobalt scale) product containing free phenol: 0.05%, total phenol: 0.7%. Reaction yield of approx. 96%.

### Example 2

### Triisodecyl phosphite with ultra-low phenol content

In a dried reactor equipped with a stirrer, temperature and pressure sensor, a system for uniform distribution of inert gas through the feedstock and a rectification column, triphenyl phosphite (200.0 g, 0.64 mol) is mixed with potassium fluoride (0.54 g, 9.3 mmol), followed by reducing the pressure to 40 mbar and the feedstock is heated to 120°C. When the preset temperature is reached, isodecanol is added to the reaction mixture (pure isodecanol with isodecanol in a mixture with phenol recovered from the synthesis of the previous batch, the total amount of isodecanol added: 340.0 g, 2.15 mol). The addition of isodecanol produces phenol, a by-product of the transesterification reaction, which is distilled off from the reaction medium together with the phenol added to the reaction along with the isodecanol from the synthesis of the previous batch.

The reaction mixture is stirred for at least 0.5 hours at the preset temperature, followed by the temperature being gradually increased to 135°C and stirring at this temperature for at least 0.5h. The temperature is then increased to 190 - 200°C. Once the reaction mixture reaches the temperature of 190°C, the pressure is reduced to 2 - 3 mbar, and an inert gas purge is initiated. Once a phenol content of <0.002% is achieved, the process is terminated by cooling, and the product is isolated by way of filtration. The reaction yields approx. 315 g of colourless liquid product (10 on the platinum-cobalt scale) with a reaction yield of approx. 97% and two by-products: phenol with a purity of ≥99.7%, and a mixture of phenol and isodecanol. The product contains free phenol in an amount of <0.001% and total phenol: 0.01%.

### Example 3

### Triisodecyl phosphite with ultra-low phenol content

In a dried reactor equipped with a stirrer, temperature and pressure sensor, a system for uniform distribution of inert gas through the feedstock and a rectification column, isodecyl diphenyl phosphite (250.0 g, 0.67 mol) and potassium fluoride (0.17 g, 2.9 mmol) are added, followed by reducing the pressure to 40 mbar and the feedstock is heated to 115°C. When the preset temperature is reached, isodecanol is added to the reaction mixture (pure isodecanol with isodecanol in a mixture with phenol recovered from the synthesis of the previous batch, the total amount of isodecanol added 243.9 g, 1.5 mol). The addition of isodecanol produces phenol, a by-product of the transesterification reaction, which is distilled off from the reaction medium together with the phenol added to the reaction along with the isodecanol from the synthesis of the previous batch.

The reaction mixture is stirred for at least 20 minutes at the set temperature, followed by the temperature being gradually increased to 135°C and stirring at this temperature for at least 0.5h. The temperature is then increased to 190 - 200°C, and the pressure is reduced to 2 - 3 mbar, and an inert gas purge is initiated. Once a phenol content of <0.002% is achieved, the process is terminated by cooling, and the product is isolated by way of filtration. The reaction yields approx. 323 g of colourless liquid product (10 on the platinum-cobalt scale) with a reaction yield of approx. 96% and two by-products: phenol with a purity of ≥99.7% and a mixture of phenol and isodecanol. The resulting product contains 0.0015% of free phenol and 0.02% of total phenol.

### Example 4

### Triisodecyl phosphite with ultra-low phenol content

In a dried reactor equipped with a stirrer, temperature and pressure sensor, a system for uniform distribution of inert gas through the feedstock and a rectification column, diisodecyl phenyl phosphite (250.0 g, 0.57 mol) is mixed with potassium fluoride (0.11 g, 1.9 mmol), followed by reducing the pressure to 40 mbar and the feedstock is heated to 115°C. When the preset temperature is reached, isodecanol (121.7 g, 0.77 mol) is added to the reaction mixture. Adding isodecanol results in the formation of phenol, which is distilled from the reaction medium.

The reaction mixture is stirred for at least 20 minutes at the set temperature, followed by the temperature being gradually increased to 135°C and stirring at this temperature for at least 20 minutes. The temperature is then increased to 190 - 200°C, and the pressure is reduced to 2 - 3 mbar, and an inert gas purge is initiated. Once a phenol content of <0.002% is achieved, the process is terminated by cooling, and the product is isolated by way of filtration. The reaction yields approx. 278 g of colourless liquid (10 on the platinum-cobalt scale) with the content of free phenol of <0.001% and that of total phenol of 0.03%, as well as two by-products: phenol with a purity of ≥99.7% and a mixture of phenol and isodecanol. Reaction yield of approx. 97%.

### Example 5

### Tridecyl phosphite with ultra-low phenol content

Proceeding as in Example 2, except that decanol (340.0 g, 2.15 mol) is used instead of isodecanol, yields approx. 311 g of a liquid, colourless (10 on the platinum-cobalt scale) product containing <0.001% of free phenol and 0.02% of total phenol. Reaction yield of approx. 96%.

### Example 6

### Tridecyl phosphite with ultra-low phenol content

Proceeding as in Example 3, except that decyl diphenyl phosphite (250.0 g, 0.67 mol) is used instead of isodecyl diphenyl phosphite, and decanol (243.9 g, 1.5 mol) is used instead of isodecanol, approx. 330 g of colourless liquid (20 on the platinum-cobalt scale) is obtained with a reaction yield of approx. 98%. The product contains <0.001% of free phenol and 0.03% of total phenol.

### Example 7

### Tridecyl phosphite with ultra-low phenol content

Proceeding as in Example 4, except that didecyl phenyl phosphite (250.0 g, 0.57 mol) is used instead of diisodecyl phenyl phosphite, and decanol (121.7 g, 0.77 mol) is used instead of isodecanol, yields approx. 275 g of colourless liquid (10 on the platinum-cobalt scale), containing 0.001% of free phenol and 0.04% of total phenol. Reaction yield of approx. 96%.

### Example 8

### Trilauryl phosphite with ultra-low phenol content

Proceeding as in Example 2, using the following amounts of raw materials: 200.0 g (0.64 mol) of triphenyl phosphite, 0.17 g (2.9 mmol) of potassium fluoride and 396.3 g (2.13 mol) of dodecanol, yields approx. 363 g of colourless liquid (20 on the platinum-cobalt scale), containing 0.002% of free phenol and 0.03% of total phenol. Reaction yield of approx. 96%.

### Comparative Example 9

### Triisotridecyl phosphite

In a dried reactor equipped with a stirrer, temperature and pressure sensor, a system for uniform distribution of inert gas through the feedstock and a rectification column, triphenyl phosphite (200.0 g, 0.64 mol) is mixed with potassium fluoride (0.14 g, 2.4 mmol), followed by reducing the pressure to 50 mbar and the feedstock is heated to 130°C. When the preset temperature is reached, isotridecanol is added (pure isotridecanol with isotridecanol in a mixture with phenol recovered from the synthesis of the previous batch, the total amount of isotridecanol added: 400.4 g, 2.0 mol). The addition of isotridecanol produces phenol, a by-product of the transesterification reaction, which is distilled off from the reaction medium together with the phenol added to the reaction along with the isotridecanol from the synthesis of the previous batch. Once all the isotridecanol has been added, the temperature is gradually increased to 190 -195 °C and the pressure is reduced to 10 mbar. After heating to 190°C, an inert gas purge is initiated through the feedstock to remove residual phenol and unreacted isotridecanol from the reaction mixture. Once a phenol content of <0.1% and an isotridecanol content of <2.0% is achieved, the process is terminated by cooling, and the product is isolated by way of filtration. The reaction yields approx. 390.0 g of colourless liquid product (10 on the platinum-cobalt scale) with a reaction yield of approx. 96% and two by-products: phenol with a purity of ≥99.7% and a mixture of phenol and isotridecanol. The product contains 0.04% of free phenol, and 0.65% of total phenol.

### Example 10

### Triisotridecyl phosphite with ultra-low phenol content

In a dried reactor equipped with a stirrer, temperature and pressure sensor, a system for uniform distribution of inert gas through the feedstock and a rectification column, triphenyl phosphite (200.0 g, 0.64 mol) is mixed with potassium fluoride (0.3 g, 5.2 mmol), followed by reducing the pressure to 40 mbar and the feedstock is heated to 130°C. When the preset temperature is reached, isotridecanol is added (pure isotridecanol with isotridecanol in a mixture with phenol recovered from the synthesis of the previous batch, the total amount of isotridecanol added 417.0 g, 2.1 mol). The addition of isotridecanol produces phenol, which is removed from the reaction medium together with the phenol added to the reaction along with the isotridecanol from the synthesis of the previous batch.

The reaction mixture is stirred for at least 0.5 hours at the preset temperature, followed by the temperature being gradually increased to 135 °C and stirring at this temperature for at least 0.5h. The temperature is then increased to 190 - 200°C, and the pressure is reduced to 2 - 3 mbar, and an inert gas purge is initiated. Once a phenol content of <0.002% and an isotridecanol content of <2.0% is achieved, the process is terminated by cooling, and the product is isolated by way of filtration. The reaction yields approx. 393 g of colourless liquid (20 on the platinum-cobalt scale) with a reaction yield of approx. 97% and two by-products: phenol with a purity of ≥99.7% and a mixture of phenol and isotridecanol. The product contains <0.001% of free phenol and <0.01% of total phenol.

### Example 11

### Tris(tridecyl) phosphite with ultra-low phenol content

Proceeding as in Example 10, except that tridecanol (417.0 g, 2.1 mol) and potassium fluoride 0.25 g (4.3 mmol) are used instead of isotridecanol, approx. 390 g of liquid colourless product (10 on the platinum-cobalt scale) is obtained with a reaction yield of approx. 96%. The product contains 0.001% of free phenol and 0.02% of total phenol.

## Claims

1. A method for transesterification of phosphites with the general formula (I):
P(OR¹)(OR²)(OR³) (I),
wherein substituent R¹ represents a phenyl group optionally substituted by 1 to 5 substituents independently selected from the group of substituents comprising C1-C9 alkyl substituents, substituents R² and R³ independently represent a phenyl group optionally substituted by 1 to 5 substituents independently selected from the group of substituents comprising C1-C9 alkyl substituents, or a linear or branched C8-C18 alkyl group,
using an alcohol with the general formula (II):
R⁴OH (II),
wherein the R⁴ substituent represents a linear or branched C8-C18 alkyl group;
in the presence of an alkaline catalyst, wherein the transesterification product contains not more than 0.01 wt% of free phenol and contains not more than 0.1 wt% of total phenol, **characterised in that** under anhydrous conditions and in an inert gas atmosphere, using an alkaline catalyst selected from the group comprising potassium fluoride, cesium fluoride and rubidium fluoride, the following steps are carried out:
a) providing the phosphite with the general formula (I),
b) raising the temperature of the mixture to a range between 90°C and 150°C and reducing the pressure in the reaction vessel to a range between 25 and 90 mbar,
c) providing the alcohol with the formula (II),
d) gradually distilling off a phenol with the formula R¹OH,
e) stirring the reaction mixture for at least 15 minutes,
f) maintaining the temperature of the mixture at a range between 120°C and 165°C and stirring at this temperature for at least 15 minutes,
g) raising the temperature of the mixture to a range between 180°C and 220°C and reducing the pressure in the reaction vessel to a range between 0.5 mbar and 20 mbar while bubbling the inert gas through the reaction mixture,
h) isolating the reaction product.

2. The method according to claim 1, **characterised in that** the phosphite with the general formula (I) is selected from the group comprising isodecyl diphenyl phosphite, diisodecyl phenyl phosphite, decyl diphenyl phosphite, didecyl phenyl phosphite and phosphites obtained by reacting phosphorus trichloride with phenol and an aliphatic alcohol having 8 to 18 carbon atoms or obtained by way of transesterification reaction of a triaryl phosphite with an aliphatic alcohol having 8 to 18 carbon atoms, preferably from the group comprising isodecyl diphenyl phosphite and diisodecyl phenyl phosphite.

3. The method according to claim 2, **characterised in that** in the phosphite with the general formula (I) the substituents R² and R³ are identical and they represent either a linear or a branched C8-C18 alkyl group, preferably the phosphite with the general formula (I) is a diisodecyl phenyl phosphite, didecyl phenyl phosphite.

4. The method according to claim 2, **characterised in that** the phosphite with the general formula (I) is isodecyl diphenyl phosphite, decyl diphenyl phosphite.

5. The method according to claim 1, **characterised in that** in the phosphite with the general formula (I) the substituents R¹, R² and R³ are identical and they represent a phenyl group that is optionally substituted by 1 to 5 substituents independently selected from the group of substituents comprising C1-C9 alkyl substituents.

6. The method according to claim 5, **characterised in that** the phosphite with the general formula (I) is selected from the group comprising triphenyl phosphite, tricresyl phosphite, tris(*tert*-butylphenyl) phosphite, tris(*tert*-pentylphenyl) phosphite, tris(nonylphenyl) phosphite and a mixture of aryl phosphites obtained by reacting phosphorus trichloride with a mixture of phenol and an alkylated phenol, still more preferably the phosphite with the general formula (I) is selected from the group comprising triphenyl phosphite, tricresyl phosphite, tris(*tert*-butylphenyl) phosphite, tris(tert-pentylphenyl) phosphite, tris(nonylphenyl) phosphite, and most preferably the phosphite with the general formula (I) is triphenyl phosphite.

7. The method according to any one of the preceding claims, **characterised in that** step b) involves raising the temperature of the mixture to a range between 110°C and 135°C and reducing the pressure in the reaction vessel to a range between 30 and 50 mbar.

8. The method according to any one of the preceding claims, **characterised in that** step e) involves stirring the reaction mixture for at least 25 minutes.

9. The method according to any one of the preceding claims, **characterised in that** step f) involves maintaining the temperature of the mixture as a temperature at a range between 130°C and 150°C and stirring at this temperature for at least 25 minutes.

10. The method according to any one of the preceding claims, **characterised in that** step g) involves raising the temperature of the mixture to a range between 185°C and 210°C and reducing the pressure in the reaction vessel to a range between 1 mbar and 5 mbar while bubbling the inert gas through the reaction mixture.

11. The method according to any one of the preceding claims, **characterised in that** the alcohol with the general formula (II) is selected from the group comprising octanol, 2-ethylhexanol, nonanol, 1-decanol, isodecanol, 1-dodecanol, tridecanol, isotridecanol, tetradecanol, hexadecanol and stearyl alcohol, preferably the alcohol with the general formula (II) is selected from the group comprising 1-decanol, isodecanol, 1-dodecanol, tridecanol and isotridecanol.

12. The method according to any one of the preceding claims, **characterised in that** the transesterification product contains no more than 0.005 wt% of free phenol and contains no more than 0.05 wt% of total phenol.

13. The method according to any one of the preceding claims, **characterised in that** per each phenyl group in the phosphite with the general formula (I) at least 1 equivalent of the alcohol with the general formula (II) is used and per each mole of the phosphite with the general formula (I) no more than 6 moles of the alcohol with the general formula (II) are used.

14. The method according to claim 13, **characterised in that** no more than 5 moles of the alcohol with the general formula (II) are used per each mole of the phosphite with the general formula (I); preferably, no more than 4 moles of the alcohol with the general formula (II) are used for each mole of the phosphite with the general formula (I).

15. The method according to any one of the preceding claims, **characterised in that** the catalyst is used in amounts of 0.01% to 1% by weight of the alcohol used, preferably the catalyst is used in amounts of 0.03% to 0.5% by weight of the alcohol used.
